# EUROPEAN PATENT APPLICATION

(11) **EP 0 649 078 A1**
(43) Date of publication of application: **19.04.1995**
(21) Application number: 94116164.8
(22) Date of filing: 13.10.1994
(51) Int. Cl.: G05D 1/03

(54) **Method of and apparatus for guiding microrobot**

(30) Priority: 19.10.1993 JP 260830/93; 26.08.1994 JP 202358/94
(71) Applicant: SEIKO EPSON CORPORATION, Shinjuku-ku Tokyo 163 (JP)
(72) Inventor: Miyazawa, Osamu, Suwa-shi, Nagano-ken 392 (JP)
(74) Representative: Hoffmann, Eckart, Dipl.-Ing.

(57) **Abstract**

A method of and an apparatus capable of guiding a microrobot (100) on the surface (10) of a base plate (1) without a necessity of an operator's guiding operation in such a manner that the operation area for the microrobot can easily be enlarged, contracted or changed. Sensors (111R, 111L) of the microrobot are caused to react with light, magnetism or sound by virtue of an arbitrary passage (4) for the microrobot formed on the surface (10), by projecting light emitted from a light source (2) through a pattern mask (3) from a reverse side of the light transmissible base plate (1).

## Description

### BACKGROUND OF THE INVENTION

### Field of the Invention

The present invention relates to a method of and an apparatus for guiding a microrobot that moves in response to light, magnetism, sound or the like.

### Description of the prior Art

The document WO-93/09018 discloses a microrobot that moves in response to light, magnetism, sound or the like and that has a volume of about 1 cm³ or smaller. The microrobot is guided by a wireless method and therefore an operator must irradiate the sensor or the like of the microrobot with light or the like to guide the microrobot. If the movement of the microrobot like a living thing is enjoyed, the guiding operation performed by an operator is acceptable.

In a case where a microrobot of the foregoing type is used in a certain operation, for example, an operation (for example, mounting or bonding elements or removing foreign matters) to be performed in a place into which arms of a usual robot cannot be introduced or operated satisfactorily, the microrobot must be automatically guided. Therefore, the conventional guiding method requiring the operator's guiding operation cannot be adapted satisfactorily.

The conventional industrial robot or automatic machine having a usual structure cannot arbitrarily turn its moving direction outside a predetermined operation area thereof. Therefore, the operation area cannot easily be enlarged or changed. In particular, a microrobot of the foregoing type cannot easily possess a function of programming the passage thereof or a function of avoiding obstacles from the viewpoint of the technological level and of reducing the cost. Accordingly, a guiding apparatus for automatically guiding the microrobot must be provided separately from the microrobot. However, there has not been disclosed an apparatus for guiding a microrobot of the foregoing type that is capable of freely enlarging and changing the operation area for the microrobot.

### SUMMARY OF THE INVENTION

Accordingly, an object of the present invention is to provide a method of and an apparatus for guiding a microrobot capable of overcoming the foregoing problems and enabling the operation area for a microrobot to be easily enlarged, changed or contracted in a manner like a diorama.

Another object of the present invention is to provide a method of and an apparatus for guiding a microrobot capable of causing the microrobot to move while supervising the position of the microrobot.

Another object of the present invention is to provide a method of and an apparatus for guiding a microrobot capable of automatically guiding the microrobot to a charging area for the purpose of continuously operating the microrobot.

These objects are achieved with a method as claimed in claim 1 and an apparatus as claimed in claim 7, respectively.

Preferred embodiments of the invention are subject-matter of the dependent claims.

According to one aspect of the present invention, there is provided a method of guiding a microrobot comprising the steps of: forming a pattern of change in a physical quantity on a base plate for defining a surface on which a microrobot having detection means capable of detecting change in one or more physical quantities is moved; and causing the microrobot to move along the pattern.

In order to embody the foregoing method, a guiding apparatus according to the present invention comprises: a base plate for defining a surface on which the microrobot moves and passage forming means for forming a pattern of change in a physical quantity as a passage for the microrobot on a surface of the base plate, on which the microrobot is moved.

In the present invention, the passage forming means forms the change pattern (guide pattern) of the physical quantity on the base surface, i.e. the surface of the base or base plate on which the microrobot is moved, and the microrobot moves along the change pattern of the physical quantity while its detection means responds to a value of the physical quantity. Therefore, the operator's guiding operation can be omitted to automatically guide the microrobot. The passage formed on the base surface is defined by the change pattern of the physical quantity, such as light, magnetism and sound. Therefore, the pattern can easily be changed and therefore the operation area for the microrobot can freely be enlarged or changed. The physical quantity is for instance the intensity of light, magnetism, sound etc. but it may also be any other quantity, such as a wavelength of light, sound etc., as long as corresponding detection means of the microrobot are capable of distinguishing between different values of that physical quantity.

It is preferable that the present invention has such an arrangement that the physical quantity near the base surface is detected and the microrobot is moved while detecting the position of the microrobot in accordance with a fact that the result of the detection changes depending upon the position at which the microrobot moves. In order to achieve this, a robot position detection means is provided for the guiding apparatus, the robot position detection means being arranged to detect the physical quantity near the base surface so as to detect the position of the microrobot in accordance with a fact that the result of the detection changes depending upon the position at which the microrobot moves. If the position of the microrobot can be supervised as described above, it is easy to cause the microrobot to perform a complicated operation.

It is preferable that the passage for the microrobot includes a charging area in which a charging unit for charging electric power to the microrobot is disposed. The foregoing structure enables electric power to be charged into the microrobot without a necessity of removing the microrobot from the base surface. Therefore, the microrobot is enabled to perform a continuous operation.

In one embodiment, the present invention has the arrangement that a projecting apparatus is used to project a bright and dark light pattern, which is a physical quantity, onto the base surface and the microrobot is enabled to move along the bright and dark pattern.

In order to embody the foregoing guiding method, a guiding apparatus according to the present invention has such an arrangement that the passage forming means is provided with the projecting apparatus for projecting a bright and dark light pattern, which is a physical quantity, on the surface of the base plate, on which the microrobot is moved.

In a case where the bright and dark light pattern is used, it is preferable that robot position detection means be provided that detects the intensity of light near the base surface so as to detect the position of the microrobot in accordance with a fact that the result of the detection changes depending upon the position at which the microrobot moves.

In a case where the base plate has light transmissibility, the projecting apparatus is provided with a light source portion for irradiating the base plate with light from the reverse side of the base plate and a pattern mask disposed between the light source portion and the base plate and including a light transmissible portion having a predetermined pattern corresponding to the bright and dark pattern. As an alternative to this, the projecting apparatus is provided with a light source portion for irradiating the base surface from an upper position and a pattern mask disposed between the light source portion and the base plate and including a light transmissible portion having a pattern corresponding to the bright and dark pattern.

The base plate according to an embodiment of the present invention has light transmissibility, a group of light emitting members disposed on the reverse side of the base plate is caused to emit light to project a bright and dark light pattern, which is a physical quantity, on the base surface and the microrobot is enabled to be moved along the bright and dark pattern.

In order to embody the foregoing guiding method, the passage forming means is provided with the group of the light emitting members disposed on the reverse side of the base plate and serving as light sources and a light emitting member control means for causing the light emitting member group to emit light in a predetermined pattern.

In the foregoing case, a robot position detection means may be used to detect the position of the microrobot in accordance with a fact that the electromotive force of a portion of an LED group serving as the light emitting group that is not emitting light changes in response to light reflected by the microrobot. The position of the microrobot can as well as be detected by a robot position detection means which has light receiving members disposed among the light emitting member group and which detects the position of the microrobot in accordance with a fact that the intensity of light received by the light receiving members changes in response to light reflected by the microrobot.

In a case where the foregoing bright and dark light pattern is used, it is preferable that the passage forming means be provided with an optical system, such as a light diffusion plate or a reflecting plate, for diverging or converging light emitted from the light source to change the size of the bright and dark light pattern to be projected on the surface of the base plate, on which the microrobot is moved.

The passage forming means may be provided with a light source portion for, within a predetermined range, irradiating the base surface with light and a drive mechanism for moving the position, to which light emitted from the light source portion is applied, on the surface of the base plate, on which the microrobot is moved.

According to the present invention, a magnetism generating means may be used to form an intense and weak magnetism pattern, which is a physical quantity, on the base surface to move the microrobot along the intense and weak pattern.

In order to embody the foregoing guiding method, the present invention has such an arrangement that the passage forming means is provided with a magnetic field generating means, such as a sheet magnet, a magnetic film or a magnetic head, for forming an intense and weak magnetism pattern, which is a physical quantity, on the surface of the base plate, on which the microrobot is moved.

In the foregoing case, it is preferable that a robot position detection means be provided which supervises the magnetic flux density near the base surface so as to detect the position of the microrobot in accordance with a fact that the magnetic flux density changes depending upon the position at which the microrobot moves.

The present invention has such an arrangement that an ultrasonic wave generating means is used to form an intense and weak ultrasonic wave pattern, which is a physical quantity, on the base surface to move the microrobot along the intense and weak pattern.

In order to embody the foregoing guiding method, the present invention has such an arrangement that the passage forming means is provided with an ultrasonic wave generating means, such as an ultrasonic wave head, for forming an intense and weak ultrasonic wave pattern, which is a physical quantity, on the surface of the base plate, on which the microrobot is moved.

In the foregoing case, it is preferable that a robot position detection means be provided which supervise the intensity of the ultrasonic waves near the base surface to detect the position of the microrobot in accordance with a fact that the intensity of the ultrasonic waves changes depending upon the position at which the microrobot moves.

The foregoing guiding apparatus can be used as, for example, a measuring apparatus. In the foregoing case, measuring positions to be detected by sensors mounted on the microrobot, are included in the passage for the microrobot.

The guiding apparatus can be also used as an element conveyance apparatus. In the foregoing case, the passage for the microrobot is provided with a first element sending/receiving area in which the microrobot receives the element and a second element sending/receiving area in which the microrobot sends, at a predetermined position, the element received by the microrobot in the first element sending/receiving area.

Other and further objects, features and advantages of the invention will be appear more fully from the following detailed description in conjunction with the drawings which illustrate preferred embodiments of the invention.

### BRIEF DESCRIPTION OF THE DRAWINGS

- Fig. 1: is a side view which illustrates an example of a microrobot suitable for the present invention;
- Fig. 2: is a plan view which illustrates the microrobot shown in Fig. 1;
- Fig. 3: is a bottom view which illustrates the microrobot shown in Fig. 1;
- Fig. 4: is a block diagram which illustrates the function of a microcomputer control unit of a circuit portion of the microrobot shown in Fig. 1;
- Fig. 5: is a circuit diagram which illustrates sensors for the microrobot shown in Fig. 1;
- Fig. 6: is a plan view which illustrates a drive unit for the microrobot shown in Fig. 1;
- Fig. 7: is a developed view which illustrates the drive unit shown in Fig. 6;
- Fig. 8: is a timing chart for explaining the basic function of the microrobot shown in Fig. 1;
- Fig. 9: is a schematic view which illustrates an apparatus for guiding a microrobot according to a first embodiment of the present invention;
- Fig. 10: is a schematic view which illustrates an apparatus for guiding a microrobot according to a second embodiment of the present invention;
- Fig. 11: is a schematic view which illustrates an apparatus for guiding a microrobot according to a third embodiment of the present invention;
- Fig. 12: is a schematic view which illustrates an apparatus for guiding a microrobot according to a fourth embodiment of the present invention;
- Fig. 13: is a schematic view which illustrates an application of the apparatus for guiding a microrobot according to the fourth embodiment of the present invention;
- Fig. 14: is a schematic view which illustrates an apparatus for guiding a microrobot according to a fifth embodiment of the present invention;
- Fig. 15: is schematic view which illustrates an apparatus for guiding a microrobot according to a sixth embodiment of the present invention;
- Fig. 16: is schematic view which illustrates an apparatus for guiding a microrobot according to a seventh embodiment of the present invention;
- Fig. 17: is schematic view which illustrates an apparatus for guiding a microrobot according to an eighth embodiment of the present invention;
- Fig. 18: is a side view which illustrates the apparatus for guiding a microrobot shown in Fig. 17;
- Fig. 19: is a schematic view which illustrates an apparatus for guiding a microrobot according to a ninth embodiment of the present invention;
- Fig. 20: is a schematic view which illustrates an apparatus for guiding a microrobot according to a tenth embodiment of the present invention;
- Fig. 21: is a schematic view which illustrates an apparatus for guiding a microrobot according to an eleventh embodiment of the present invention;
- Fig. 22: is a plan view which illustrates an operation area allowed by an apparatus for guiding a microrobot according to a twelfth embodiment of the present invention;
- Fig. 23: is a flow chart showing a charging operation to be performed in the operation area for the microrobot shown in Fig. 22;
- Fig. 24: is a schematic view which illustrates an operation of guiding the microrobot shown in Fig. 22 to a charging position in the operation area;
- Fig. 25: is a side view which illustrates a charging mechanism disposed in the operation area for the microrobot shown in Fig. 22;
- Fig. 26: is a front view which illustrates the charging mechanism shown in Fig. 25;
- Fig. 27: is a plan view which illustrates the charging mechanism shown in Fig. 25;
- Fig. 28: is a schematic view which illustrates an apparatus for guiding a microrobot according to a thirteenth embodiment of the present invention;
- Fig. 29: is a schematic view which illustrates an apparatus for guiding a microrobot according to a fourteenth embodiment of the present invention;
- Fig. 30: is a schematic view which illustrates an apparatus for guiding a microrobot according to a fifteenth embodiment of the present invention; and
- Fig. 31: is a schematic view which illustrates an apparatus for guiding a microrobot according to a sixteenth embodiment of the present invention.

### DESCRIPTION OF THE PREFERRED EMBODIMENTS

Preferred embodiments of the present invention will now be described with reference to the drawings.

### First Embodiment

### Structure of Microrobot

The structure of a microrobot will now be described briefly prior to making a description of an apparatus for guiding the microrobot according to this embodiment. In the description to be made hereinafter, elements disposed on the two sides of the microrobot and forming a pair are classified into right hand elements, which are positioned to the right when viewed forwards from the microrobot and each of which is given symbol "R" and left hand elements, which are positioned to the left and each of which is given symbol "L".

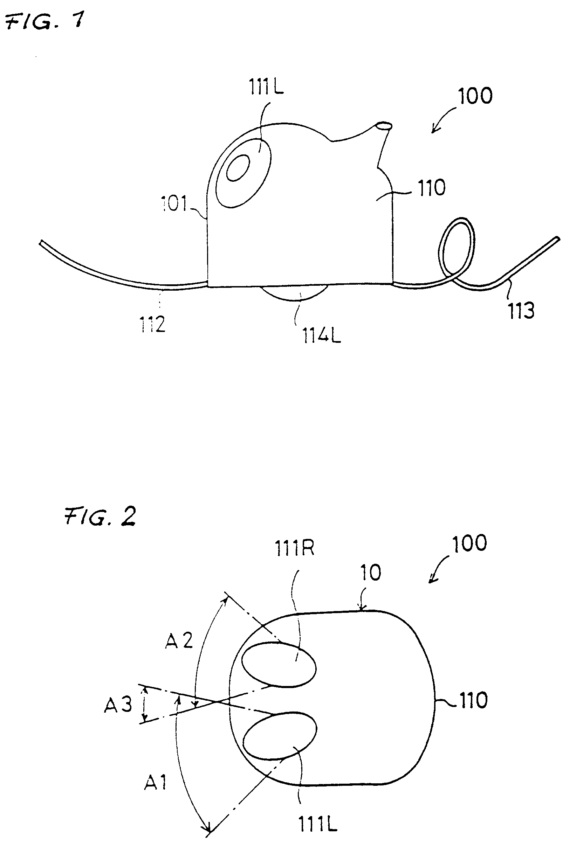

Fig. 1 is a side view of the microrobot, and Fig. 2 is a plan view of the same. A microrobot 100 has a robot body 110 which has a volume of about 1 cm³, the robot body 110 having a front surface portion 101 that has, thereon, sensors 111R and 111L (detection means) formed into a pair. In this embodiment, the sensors 111R and 111L are optical sensors, such as photo diodes or photo transistors. The sensor 111L has a visual field A1 as a region to be detected, while sensor 111R has a visual field A2 as a region to be detected. The sensors 111R and 111L have a visual field A3 in which the visual fields A1 and A2 overlap each other. Therefore, both sensors 111R and 111L detect light if light emitted by a light source is incident on the front portion of the microrobot, that is, in the visual field A3.

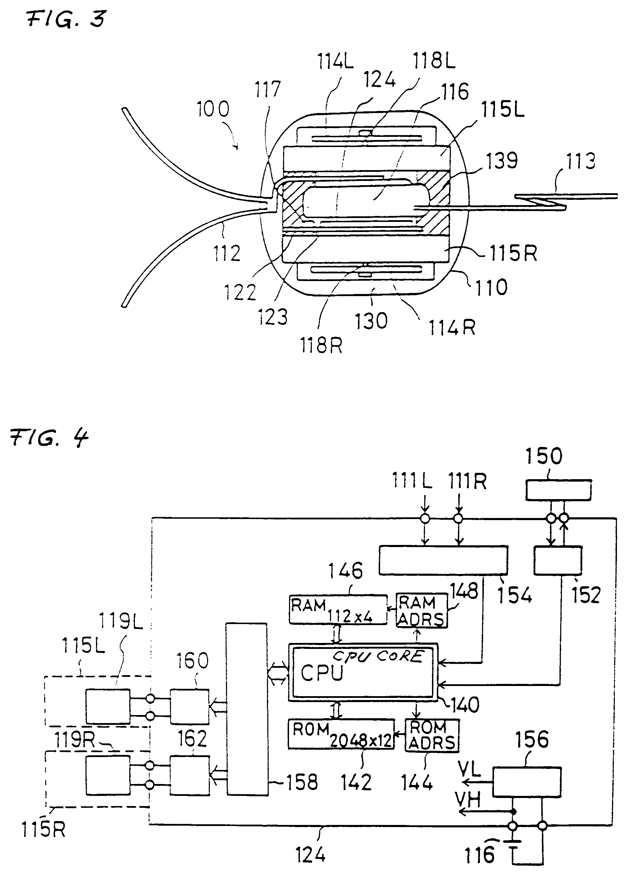

Fig. 3 is a bottom view of the microrobot 100. The microrobot 100 has, in the central portion of the bottom surface thereof, a battery power source 116. The battery power source 116 comprises an electrical double layer capacitor or nickel-cadmium battery, the battery power source 116 serving as the power source for the microrobot 100. The robot body 110 has antenna-like lead terminals 112 and a tail-like lead terminal 113 longitudinally projecting therefrom. The foregoing lead terminals 112 and 113 serve as electrode terminals when power is charged into the battery power source 116.

A circuit portion 122 is disposed on the right of the battery power source 116. The circuit portion 122 comprises a circuit substrate 123 on which a microcomputer control unit 124 (a CPU-IC), a pull-down chip resistor 117 and so forth are mounted.

Drive units 115R and 115L are disposed on the two sides of the circuit portion 122 and the battery power source 116. Each of the drive units 115R and 115L includes a step motor and a decelerating mechanism to rotate wheels 114R and 114L attached to output shafts 118R and 118L under control of the circuit portion 122. The outer surface of each of the wheels 114R and 114L is made of rubber.

Note that the battery power source 116, the circuit portion 122 and the drive units 115R and 115L are, in the front and rear portions thereof, supported by a frame 130 through spacers 139. The battery power source 116 and the circuit portion 122 respectively are placed in relatively wide areas though the total volume of the microrobot 100 is reduced. Thus, capacitors and batteries each having a small internal resistance can be mounted on the battery power source 116. Therefore, a large electric current can be obtained. Furthermore, a large-size IC chip having a complicated function can be mounted on the circuit portion 122.

Fig. 4 is a block diagram which illustrates the function of a microcomputer control unit 124 of the circuit portion 122. A CPU core 140 is composed of an ALU, a variety of registers and so forth. A ROM 142 storing a program, an address decoder 144 for the ROM 142, a RAM 146 storing a variety of data items, and an address decoder 148 for the RAM 146 are connected to the CPU core 140. Oscillation signals generated by an oscillation unit 152 having a quartz oscillator 150 as an oscillation source are, as clock signals, supplied to the CPU core 140. An input/output control circuit 154 is arranged to receive the results of the detection operations performed by sensors 111R and 111L, the thus-received results being transmitted to the CPU core 140. A voltage adjuster 156 lowers and as well as stabilizes the voltage of the battery power source 116 to supply the voltage to the circuit portion 122. A motor drive control circuit 158 transmits/receives signals to and from the CPU core 140 to control the step motors 119R and 119L through motor drive circuits 160 and 162. The step motor 119R is included in the drive unit 115R, while the step motor 119L is included in the drive unit 115L.

Fig. 5 is an example of a circuit diagram for use in the sensor 111L. The sensor 111L comprises a photo transistor 109L. A pull-down resistor 128 is, in series, connected to the emitter terminal of the photo transistor 109L to enable an output denoting received light to be taken from the emitter terminal of the photo transistor 109L. The waveform of the output denoting received light is shaped by the input/output control circuit 154 shown in Fig. 4, and then the output denoting received light is supplied to the CPU core 140. Note that the sensor 111R has the same structure as that of the sensor 111L.

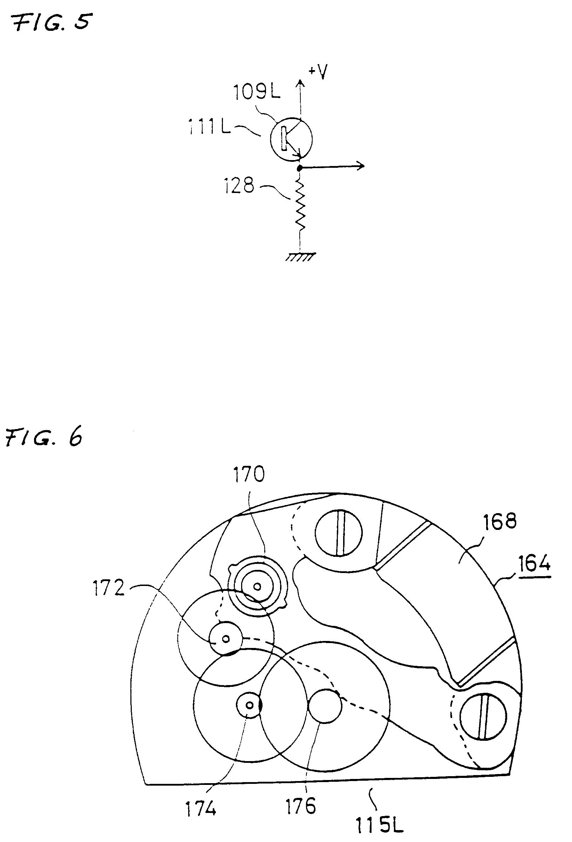

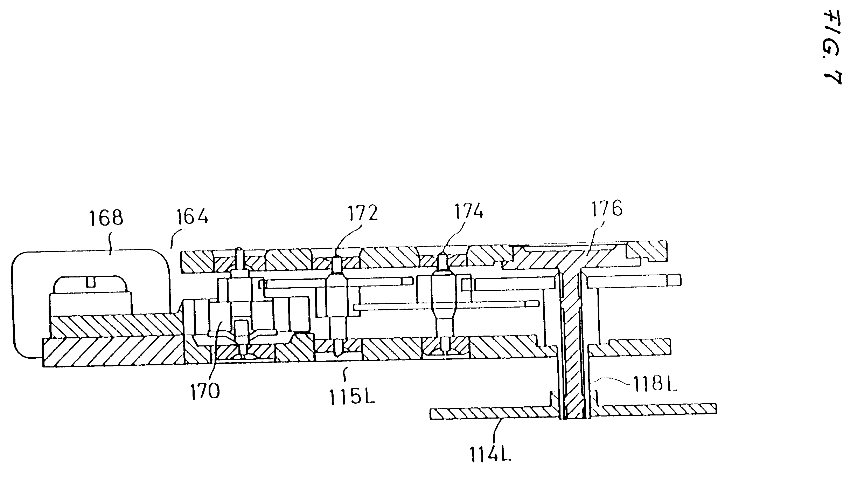

Fig. 6 is a plan view of the drive unit 115L, and Fig. 7 is a developed view of the same. Referring to Figs. 6 and 7, a step motor 164 is an electromagnetic bipolar step motor, such as it it used in electronic clocks, which consists of an exciting coil 168 and a rotor 170 which comprises a magnet. The rotor 170 drives a pinion 172. The pinion 172 drives a pinion 174 through a gear. The pinion 174 drives a pinion 176 through a gear. The pinion 176, thus decelerated, rotates the wheel 114L. The drive unit 115R has the same structure as that of the drive unit 115L.

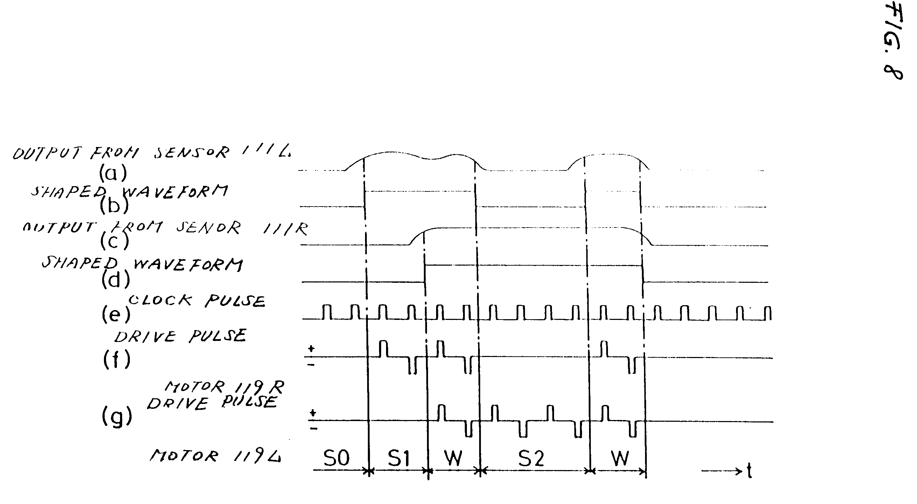

Fig. 8 is a timing chart showing the basic operation of the microrobot 100. Referring to Fig. 8 (a), the output from each of the sensors 111R and 111L is 0 V period S0 in which no light is made incident upon the sensors 111R and 111L. If light is made incident upon the sensors 111R and 111L, voltage corresponding to the quantity of light is transmitted from each of the sensors 111R and 111L. The waveform of the voltage is, in the input/output control circuit 154, shaped with a predetermined threshold voltage level as shown in Fig. 8 (b) and received by the CPU core 140. The motor drive control circuit 158, through the motor drive circuits 160 and 162, alternately supplies forward and reverse drive pulses to the step motors 119R and 119L as shown in Figs. 8 (f) and 8 (g). Therefore, the step motor 119R is rotated in period S1 in which the sensor 111L receives light so that the wheel 114R is rotated. On the other hand, in period S2 in which the sensor 111R receives light as shown in Fig. 8 (c), the step motor 119L is rotated as shown in Fig. 8 (g) so that the wheel 114L is rotated. Note that both step motors 119R and 119L are rotated and the wheels 114R and 114L are rotated in period W in which both sensors 111R and 111L receive light.

Referring to Fig. 2, if light emitted by the light source (not shown) is passing through a portion of the visual field A1 except the visual field A3, only the sensor 111L receives light. Thus, the step motor 164 rotates the wheel 114R in accordance with the output from the sensor 111L which has received light. Since the wheel 114L is stopped at this time, the robot body 110 is caused to turn to the left. If light emitted by the light source is present in the visual field A2 except the visual field A3, only the sensor 111R receives it and the step motor 119L rotates the wheel 114L in accordance with the output from the sensor 111R which has received light. Since the wheel 114R is stopped at this time, the robot body 110 is turned to the right.

If light emitted from the light source is present in the visual field A3, both sensors 111R and 111L receive light and thus the step motors 119R and 119L rotate the wheels 114R and 114R in accordance with the outputs from the sensors 111R and 111L which have received light. As a result, the robot body 110 moves straight toward the light source.

### Structure of Apparatus for Guiding Microrobot

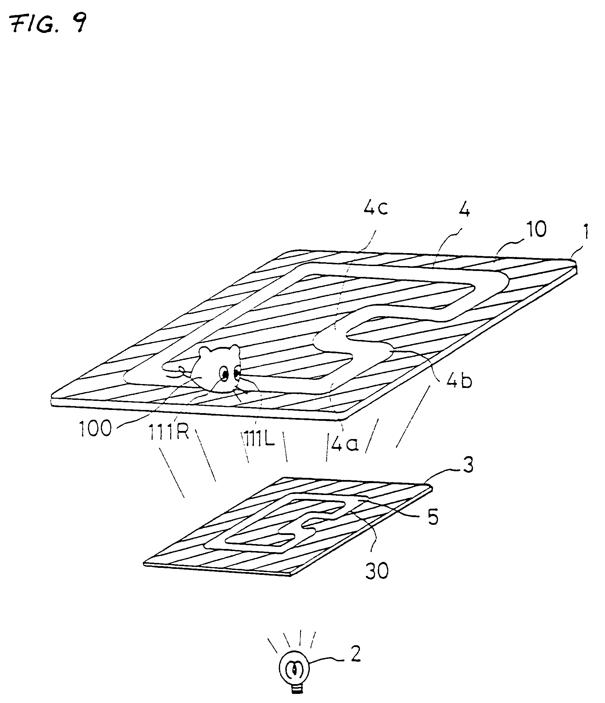

Fig. 9 is a schematic view of an apparatus for guiding the microrobot structured as described above.

The guiding apparatus according to this embodiment has a light source 2 below (on the reverse side of) a base plate 1. A pattern mask 3 including a light transmissible portion 30 having a predetermined pattern 5 is disposed between the light source 2 and the base plate 1. Thus, the base plate 1 can be irradiated with light which corresponds to the pattern 5 of the light transmissible portion 30. The base plate 1 is made of a light transmissible material, such as plastic or glass, or a light accumulative material, a portion of which emits light for certain time after it has been irradiated with light. Therefore, a passage 4 for the microrobot 100, which is brighter than other portions, is projected onto the upper surface of the base plate 1 (i.e., the base surface 10 on which the microrobot 100 is moved). That is, this embodiment has such an arrangement that a pattern consisting of bright and dark portions is formed by a projecting apparatus (a passage forming means) consisting of the light source 2 and the pattern mask 3.

Thus, when the passage 4, which is brighter than the other portions, is projected onto the base plate 1 with light transmitted through the light transmissible portion 30 of the pattern mask 3, the microrobot 100 placed on the base plate 1 detects light of the passage 4 by means of the pair of sensors 111R and 111L (the "eyes" of the microrobot) so that the microrobot 100 is moved along the passage 4.

As described above, the microrobot 100 has the sensors 111R and 111L that have the visual fields A1 and A2 as the detection regions, which overlap each other within the visual field A3. The microrobot 100 comprises the pair of sensors 111R and 111L, the lead terminals 112 and 113 for charging electric power to the battery and also serving as balancers, the wheels 114R and 114L that can be individually rotated, the drive units 115R and 115L having decelerating units for the corresponding wheels 114R and 114R, the battery power source 116 and the microcomputer control unit 124, thus the microrobot 100 being enabled to face a direction such that the bright portion is positioned in the visual field A3. Thus, if only the sensor 111L detects light in the left visual field A1 thereof except the visual field A3, light is converted into an electric pulse signal. The electric pulse signal operates only the right drive unit 115R. At this time, the operation of the left drive unit 115L is stopped. It leads to a fact that only the right wheel 114R is rotated and the left wheel 114L is stopped. Therefore, the microrobot 100 turns to the left. In accordance with the same principle, the microrobot 100 turns to the right if only the sensor 111R detects light in the right visual field A2 except the visual field A3. If both sensors 111R and 111L detect light in the central visual field A3, the microrobot 100 moves straight. As described above, the microrobot 100 moves while turning the direction thereof to always detect light within the central visual field A3 thereof.

As a result, the microrobot 100 moves straight on the straight portion of the passage 4 shown in Fig. 9. Since the sensor 111L detects leftward light at a position near a first corner 4a, the microrobot 100 turns to the left to move along the first corner 4a. Similarly, the microrobot 100 also turns to the left along a second corner 4b. Then, the microrobot 100 turns to the right along a third corner 4c so that it circulates along the passage 4.

As described above, this embodiment comprises the passage 4 that is formed by projecting a pattern consisting of bright and dark portions of light, which is a physical quantity generated by the projecting apparatus (consisting of the light source 2 and the pattern mask 3) disposed below the base surface 10. Therefore, the guiding operation to be performed by an operator can be omitted to automatically guide the microrobot 100. Since the passage 4 formed on the surface 10, on which the microrobot 100 is moved, is a pattern composed of light it can be easily varied. Namely, only by changing the pattern mask 3 an arbitrary pattern of the passage 4 can be formed on the base surface 10. As a result, the area, in which the microrobot 100 can be moved, can be widened or changed arbitrarily.

In this embodiment, the light transmissible base plate 1 is used and the bright and dark light pattern is projected from the reverse side of the base plate 1 by the light source 2 and the pattern mask 3. Since the surface of the base plate 1 having the surface 10, on which the microrobot 100 is moved, is allowed to be used freely, the foregoing area can be used arbitrarily.

Furthermore, this embodiment allows the distance from the light source 2 to the base plate 1 to be changed to enlarge or contract the passage 4.

In a case where the pattern mask 3 is formed into a rotary type mask which has a plurality of patterns, the passage 4 can further easily be changed by switching among the patterns of the pattern mask 3. By directly connecting an optical means, such as a mirror or a lens, to the base plate 1 or by separating the same from the base plate 1, limitations of the position of the light source 2 and the like can be suspended.

A robot position detection means may be employed which has a structure that the intensity of light is detected at a position near the base surface 10 and the position of the microrobot 100 is detected in accordance with the fact that the result of the detection changes depending upon a position at which the microrobot 100 is moved. In this case, the microrobot 100 can be guided while supervising the position of the microrobot 100.

### Second Embodiment

In each of the embodiments to be described hereinafter, the guiding apparatus and the microrobot respectively have the same basic structures. Therefore, common elements are given the same reference numerals and they are omitted from description.

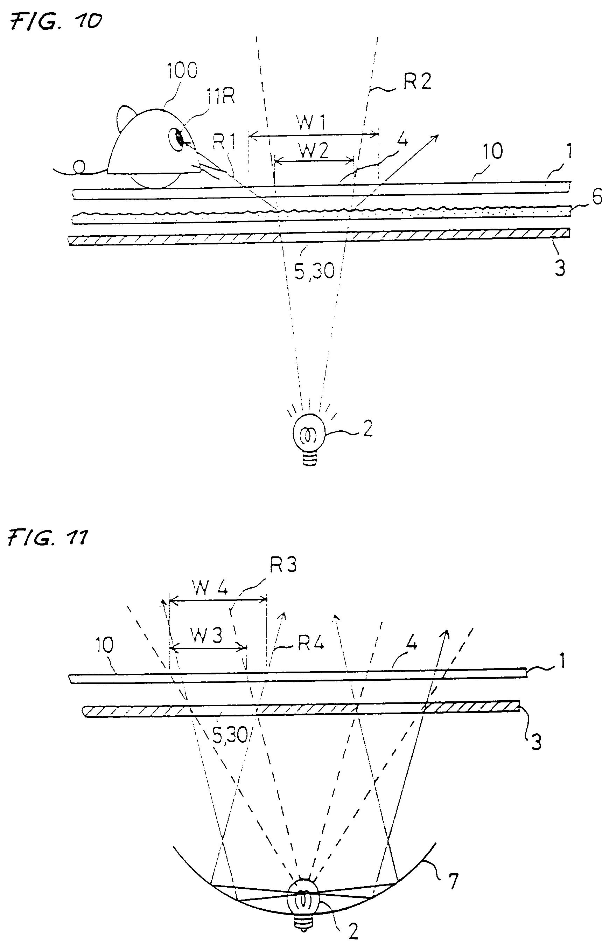

Fig. 10 is a schematic view which illustrates a second embodiment of the present invention. Also a guiding apparatus according to this embodiment comprises: the light source 2 disposed below the light transmissible base plate 1; and the pattern mask 3 including the light transmissible portion 30 having the predetermined pattern 5, the pattern mask 3 being disposed between the light source 2 and the base plate 1. Therefore, the base plate 1 is irradiated with light which corresponds to the pattern 5 of the light transmissible portion 30. Thus, the passage 4 for the microrobot 100 is formed on the base surface 10 the passage 4 being brighter than the other portions.

In this embodiment, a diffusion plate (an optical system) having a characteristic for diffusing light is disposed between the base plate 1 and the pattern mask 3 so that light R1, which has passed through the base plate 1, is projected to the base surface 10 in a state where light R1 is diffused. Thus, the width of the passage 4 is widened with respect to that of the light transmissible portion 30. Therefore, the microrobot 100 is allowed to have a wide responding range because the microrobot 100 assuredly responds to light R1 even if the microrobot 100 is deviated from the central line of the passage 4. That is, width W2 of light R2 that passes through the base plate 1 is made as designated by dashed lines shown in Fig. 10 if the diffusion plate 6 is not provided. If the diffusion plate 6 is provided, light transmitted through the diffusion plate 6 is diffused so that the width W1 on the surface (surface 10, on which the microrobot 100 is moved) of the base plate 1 is enlarged. Thus, light R1 reaches the sensors 111R and 111L of the microrobot 100 even if the microrobot 100 is deviated from the central line of the passage 4. As a result, the microrobot 100 is able to reliably respond to light R1 at the time of the movement. Note that the vertical positional relationship between the diffusion plate 6 and the pattern mask 3 may be inverted.

### Third Embodiment

Fig. 11 is a schematic view which illustrates a third embodiment of the present invention.

Also this embodiment comprises the passage 4 for the microrobot 100 that is formed on the base surface 10 by using the projecting apparatus having the light source 2 and the pattern mask 3. Furthermore, a method is employed which has such an arrangement that a reflecting plate 7 (an optical system) is used to guide light emitted from the light source 2 to widen the width of transmitted light (the width of the passage 4). That is, if the reflecting plate 7 is not used, the width of the passage 4 is limited to width W3 which corresponds to transmitted light R3. If the reflecting plate 7 is used, light reflected by the reflecting plate 7 reaches the rear surface of the pattern mask 3. Thus, wide width W1 of the passage 4 can be formed which corresponds to a portion obtained by adding transmitted light R3 that is not reflected by the reflecting plate 7 and transmitted light R4 reflected by the reflecting plate 7 to each other. Thus, the passage 4 has a wide width W4. As a result, an effect similar to that obtainable from the second embodiment can be obtained.

### Fourth Embodiment

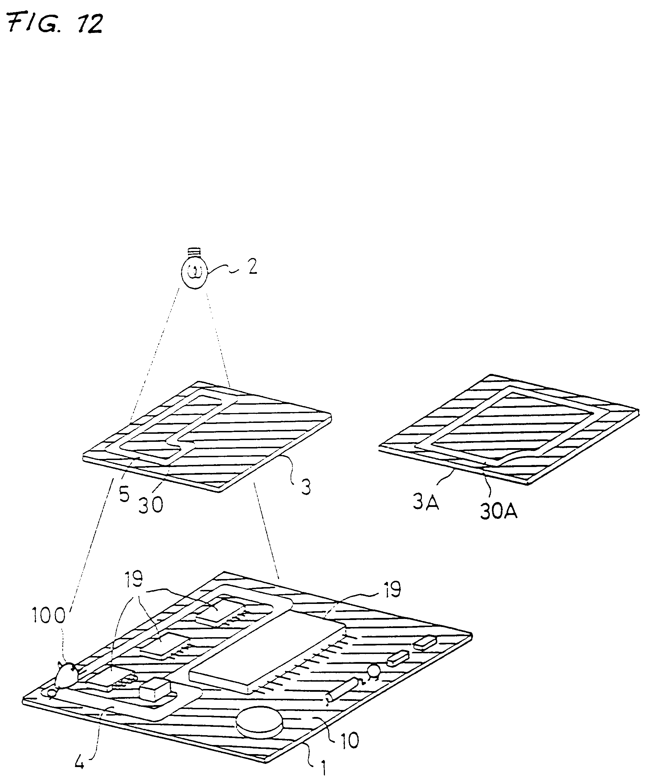

A guiding apparatus according to this embodiment comprises a base plate 1 which is a circuit board having a variety of electronic elements mounted thereon as shown in Fig. 12, the circuit board having no light transmissibility. Accordingly, a projecting apparatus (a passage forming means) comprising the light source 2 and the pattern mask 3 disposed above the base plate 1 is used to form the passage 4 for the microrobot 100 on the base surface 10. Thus, the microrobot 100 is moved on the circuit board through the electronic elements 19. If a temperature sensor or the like is mounted on the microrobot 100, the temperature distribution (the quantity of state) on the circuit board can be measured at a variety of measuring points provided along the passage 4. That is, a measuring unit having an apparatus for guiding the microrobot 100 mounted thereon can be constituted. In this case, the temperature distribution on the circuit board can be measured in a state where the electric elements 19 are being operated. Therefore, it is very convenient to collect data for designing electronic elements. Also this embodiment is able to easily change the passage 4 by only changing the pattern mask 3 to a pattern mask 3A including a light transmissible portion 30A having a large-size pattern.

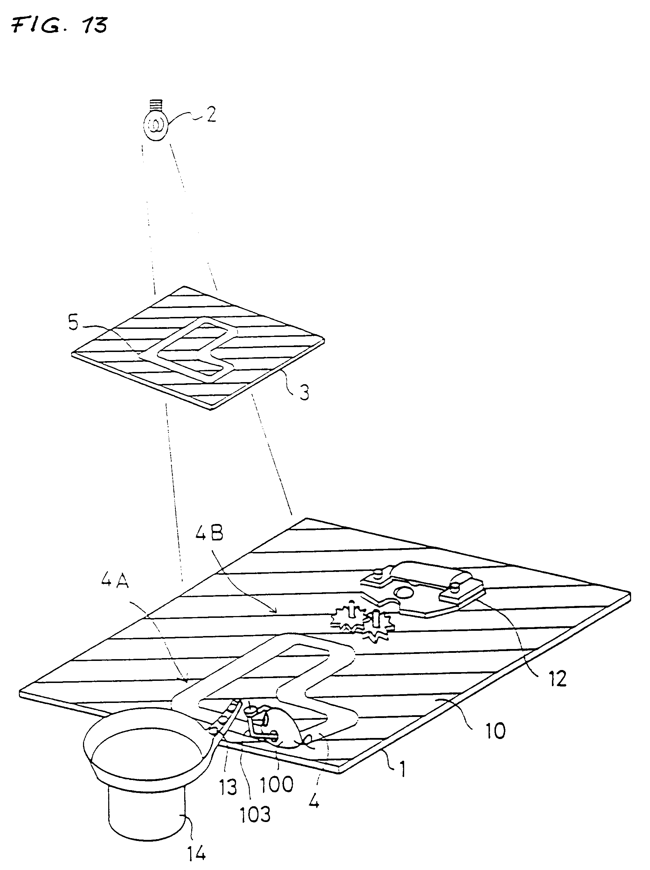

By forming the passage 4 on the base plate 1 as shown in Fig. 13 to move the microrobot 100 along the passage 4, an element 13 to be assembled into a precision unit 12, such as a watch, may be transported. That is, the microrobot 100 has arms 103 for holding the element and a parts feeder 14 for supplying the elements 13 to be mounted on the precision unit 12 is disposed at an end of the base plate 1. A passage 4 for the microrobot 100 is formed between the parts feeder 14 and the precision unit 12 by, through the pattern mask 3, irradiating the base plate 1 with light emitted by the light source 2. Thus, the microrobot 100 receives the element from the parts feeder 14 in a first area 4A (a first position at which the element is delivered and received) and moves along the passage 4 to a second area 4B (a second position at which the element is delivered and received) at which the element 13 is mounted on the precision unit 12. Then, the microrobot 100 automatically returns to the first area 4A. Thus, an element conveyance unit having the apparatus for guiding the microrobot 100 can be constituted. In the foregoing case, a plurality of pairs each consisting of the passage 4 and the parts feeder 14 may be provided for the base plate 1 to perform the assembling operation by a plurality of microrobots 100.

Note that the measuring unit or the conveyance unit having the guiding apparatus according to this embodiment comprises a robot position detection means which detects the intensity of light (which is a physical quantity) near the base surface 10 to detect the present position of the microrobot 100 in accordance with the fact that the result of the foregoing detection changes depending upon the position at which the microrobot 100 moves. Thus, the microrobot 100 is caused to perform the operation while supervising the present position of the microrobot 100.

### Fifth Embodiment

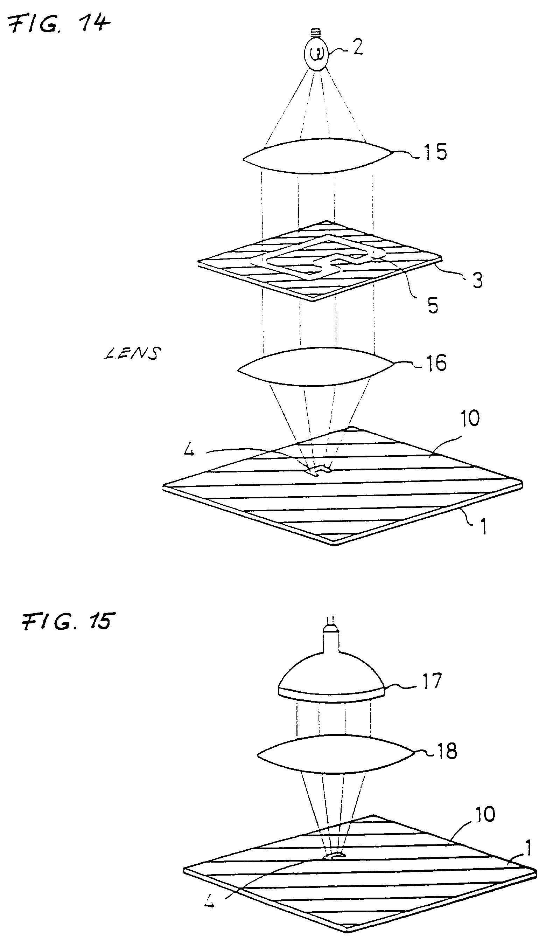

As shown in Fig. 14, in order to form the passage 4 for the microrobot 100 by irradiating the base plate 1 from a position above the base plate 1 with light emitted by the light source 2, a structure may be employed which has the arrangement that a converging lens 15 (an optical system) is disposed between the light source 2 and the pattern mask 3; and a converging lens 16 (an optical system) is disposed between the pattern mask 3 and the base plate 1. Thus, the pattern 5 of the light transmissible portion 30 formed in the pattern mask 3 is contracted to project the passage 4. In this case, the pattern mask 3 is only required to form the light transmissible portion 30 with a large-size pattern 5. Therefore, a complicated passage 4 can easily be formed.

### Sixth Embodiment

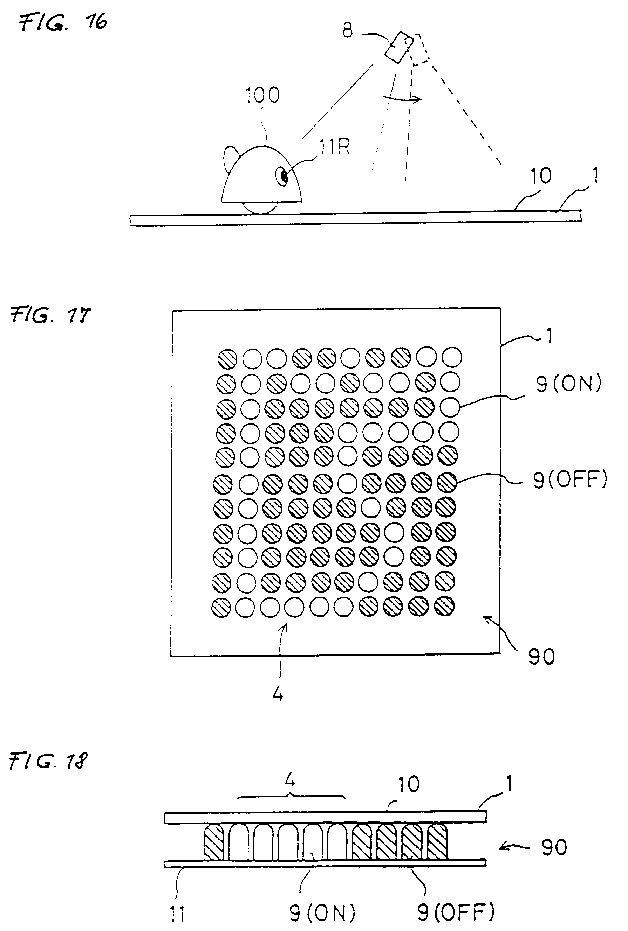

As shown in Fig. 15, the passage 4 may be projected on the base plate 1 by contracting the pattern formed on a CRT 17 by using a converging lens 18 (an optical system). In the foregoing case, the CRT 17 acts as a light source and has a function of defining the pattern of the passage 4. Thus, the pattern of the passage 4 can easily be changed by only switching an image formed on the CRT 17. Also in this case, a large pattern is required to be displayed on the CRT 17. Therefore, a complicated passage 4 can easily be formed.

### Seventh Embodiment

Fig. 16 is a schematic view which illustrates a seventh embodiment of the present invention.

This embodiment employs a method in which an oscillating spot light 8 (a light source) is disposed above the base plate 1 to form the passage for the microrobot 100. A spot light drive unit (not shown) is used to oscillate the spot light 8 longitudinally and/or horizontally in accordance with the direction in which the microrobot 100 is to be moved, thus the position irradiated with light being changed so that the microrobot 100 is guided. In other words, the position of a light spot on the base surface 10 is made to move, thereby creating a passage which the microrobot follows. Also in this case, the passage can easily be changed by only changing the extent and direction of oscillating the spot light 8. Note that the guidance may be performed by a scanning operation using laser beams or the like employed in place of the spot light 8.

### Eighth Embodiment

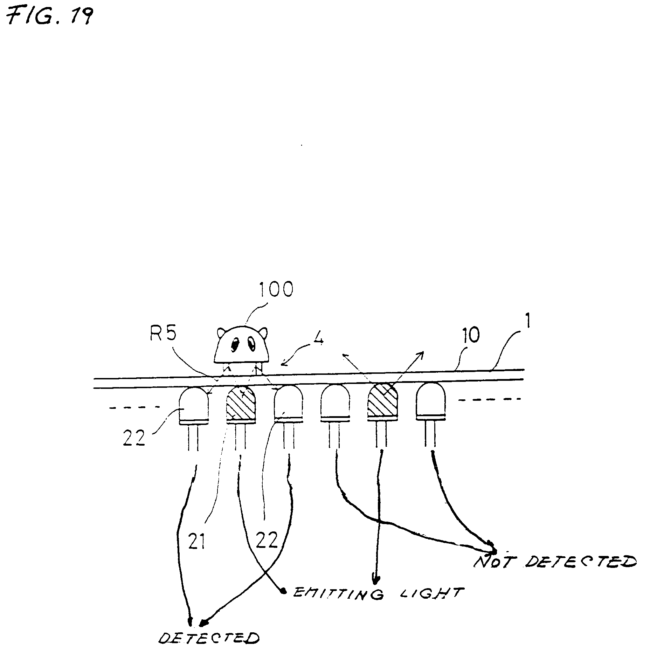

Fig. 17 is a plan view which illustrates an eighth embodiment of the present invention, and Fig. 18 is a side view of the same.

A guiding apparatus according to this embodiment comprises a light emitting member group 90 consisting of light emitting members 9 arranged in a matrix on the reverse side of the light transmissible base plate 1. The foregoing light emitting members 9 are caused to emit light in the form of a predetermined pattern in accordance with an instruction issued from a known light emitting member control means (not shown). Thus, the light emitting members 9 are turned on (designated by white circles) or turned off (designated by hatched circles) to form the passage 4 for the microrobot 100. That is, the passage 4 in the form of the pattern of light emitted by the light emitting members 9 appears when selected light emitting members 9 forming a continuous line are made to emit light. Reference numeral 11 represents a circuit board (for example, a pin board) for the light emitting members 9. The light emitting members 9 comprise miniature lamps, light emitting diodes (LEDs), infrared ray lamps or the like. Therefore, when the light emitting members 9 are turned on or off, a passage 4 can easily be formed into an arbitrary pattern and the same can easily be changed.

A light diffusing plate or the like may be disposed between the light emitting member group 90 and the base plate 1 to diffuse light emitted by the light emitting members 9 to project a wide passage 4 on the surface 10, on which the microrobot 100 is moved.

Various embodiments of the passage forming means that create a light pattern as the guide pattern have been described above. As a further embodiment, the base plate 1 may be constituted by a liquid crystal display unit (not shown). In this case, the arrangement of connecting the liquid crystal display unit to a personal computer enables an arbitrary passage to be formed easily. Furthermore, the base surface 10 can be formed into a flat shape because the liquid crystal display unit is a flat panel. Therefore, the liquid crystal display unit is preferable to form the passage 4 for the microrobot 100. Alternatively, the base plate 1 may be formed by a CRT.

### Ninth Embodiment

Fig. 19 is a schematic view which illustrates a ninth embodiment of the present invention and which shows a method of detecting the position of the microrobot.

A guiding apparatus according to this embodiment comprises a multiplicity of LEDs (Light Emitting Devices) 21 and photosensors (light receiving members) 22 disposed below (that is, on the reverse side of) the light transmissible base plate 1 to form a matrix. The LEDs 21 are caused to emit light in a predetermined pattern (the LEDs 21 that are emitting light are shown hatched in the figure) in accordance with an instruction issued from a known light emitting member control means (not shown). Thus, an arbitrary passage 4 similar to that formed in the eighth embodiment can easily be formed. The photosensors 22 disposed near the LEDs 21 detect the position of the microrobot 100. That is, light emitted by the LED 21 positioned below the microrobot 100 is allowed to reach and be reflected by the bottom surface of the microrobot 100. When reflected light R5 reaches a neighboring photosensor 22, the photosensor 22 is turned on. Therefore, the detection of the photosensor 22 which is turned on enables the position of the microrobot 100, which is moving or performing the operation, to be detected.

### Tenth Embodiment

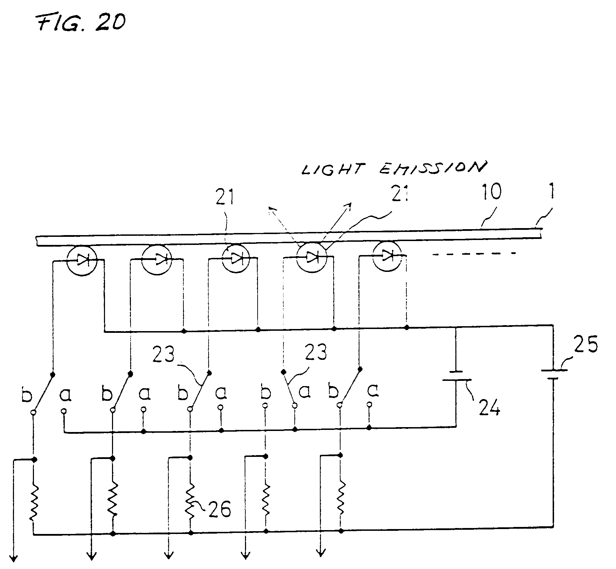

Fig. 20 is a circuit diagram which illustrates a tenth embodiment of the present invention.

A guiding apparatus according to this embodiment has such an arrangement that LEDs (Light Emitting Devices) 21 of the same type are used to emit light and as well as to detect the position of the microrobot 100. When switches (light emitting body control means) are switched to contacts a, electric currents flow from a light emission power source 24 so that the LEDs 21 emit light. As a result, those of a multiplicity of LEDs 21 that emit light form the passage 4 for the microrobot 100. When the switches 23 are switched to contacts b, the LEDs 21 do not emit light. If the microrobot 100 is moved to the LED 21 which is emitting light, light reflected by the microrobot 100 reaches a neighboring LED 21 which is not emitting light similarly to the ninth embodiment. Thus, the LED 21, that is not emitting light, is brought to an electrically conductive state due to light excitation. As a result, a small electric current starts flowing from a detecting power source 25. Since a resistor 26 is connected to each of the contacts b, an electromotive force is generated at each of the two ends of the resistor 26. Thus, the position of the microrobot 100 can be detected by supervising the electromotive force at each of the two ends of each resistor 26 and by detecting the LED 21 which has received light.

### Eleventh Embodiment

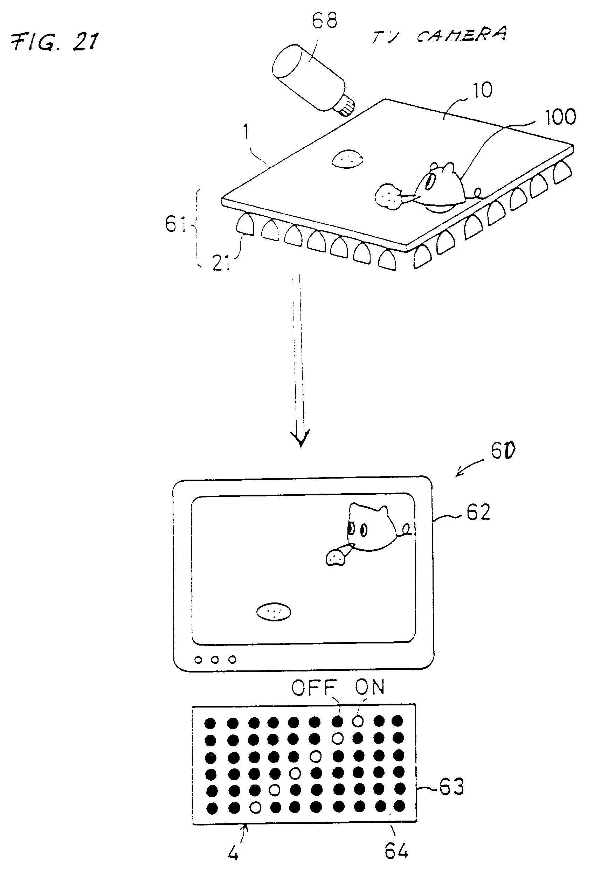

Fig. 21 is a schematic view which illustrates an eleventh embodiment of the present invention.

A guiding apparatus according to this embodiment has such an arrangement that the LEDs 21 are disposed in the form of a lattice below the light transmissible base plate 1 so that a lamp array 61 is constituted. The position of the microrobot 100 on the base plate 1 is supervised by a TV camera 68. An image taken by the TV camera 68 is transmitted by means of wireless or through a wire so as to be displayed on a monitor 62 of a control unit 60. A control panel 63 of the control unit 60 has control switches which correspond to the LEDs 21 of the lamp array 61. The control switches 64 are disposed in the same configuration as that of the LEDs 21 of the lamp array 61. Therefore, when desired control switches 64 are depressed, the control switches 64 emit light and the corresponding LEDs 21 emit light. Thus, the passage 4 for the microrobot 100 is, by the LEDs 21 which are emitting light, projected on the base surface 10. Furthermore, the position of the passage 4 can be monitored in accordance with the state of light emission from the control switches 64.

In a case where the foregoing passage forming apparatus is employed, the passage 4 can easily be changed by remote control while supervising the base plate 1 and in accordance with the supervised state. Therefore, the foregoing structure is suitable to perform a dangerous operation, such as an experiment for synthesizing a novel chemical compound or a space operation.

### Twelfth Embodiment

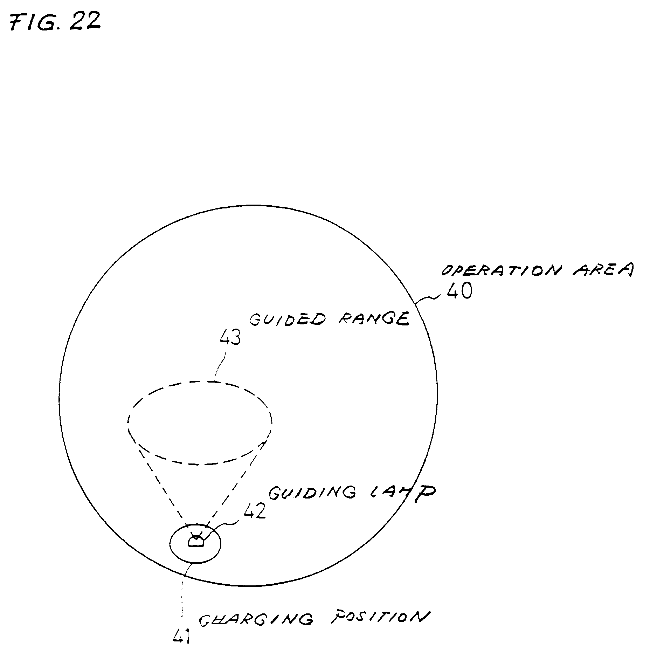

Fig. 22 is a schematic view which illustrates a method of charging electric power into the microrobot according to twelfth embodiment of the present invention.

A guiding apparatus according to this embodiment comprises a charging position 41 in an operation area 40 for the microrobot 100. A guiding lamp 42 is disposed at the charging position 41. Thus, when the microrobot 100 has been moved to the guided range (a guided area) 43, the guiding lamp 42 is turned on so that the microrobot 100 is guided to the charging position 41. A charging unit to be described later is disposed at the charging position 41.

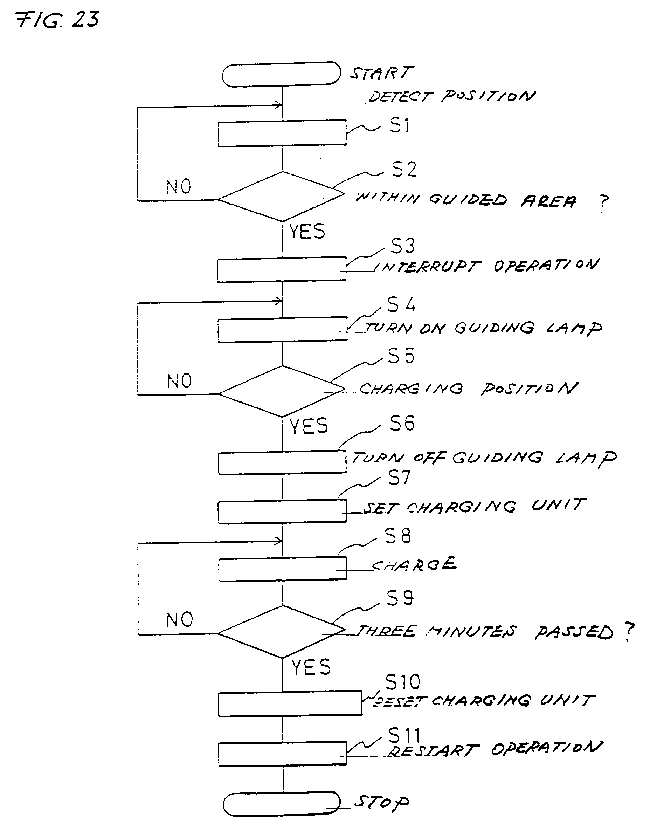

Fig. 23 is a flow chart showing the operation for charging electric power into the microrobot.

If the microrobot 100 must be charged, the position of the microrobot 100 is detected by the robot position detection apparatus according to the ninth embodiment or the tenth embodiment or the like (step S1). Then, a discrimination is made that the microrobot 100 is in the operation area 40 outside the guided area 43 or the same is in the guided area 43 (step S2). If the microrobot 100 is positioned outside the guided area 43, the microrobot 100 is guided into the guided area 43. The microrobot 100 is guided to the guided area 43 as described above, and then the operation of the microrobot 100 is interrupted temporarily (step S3).

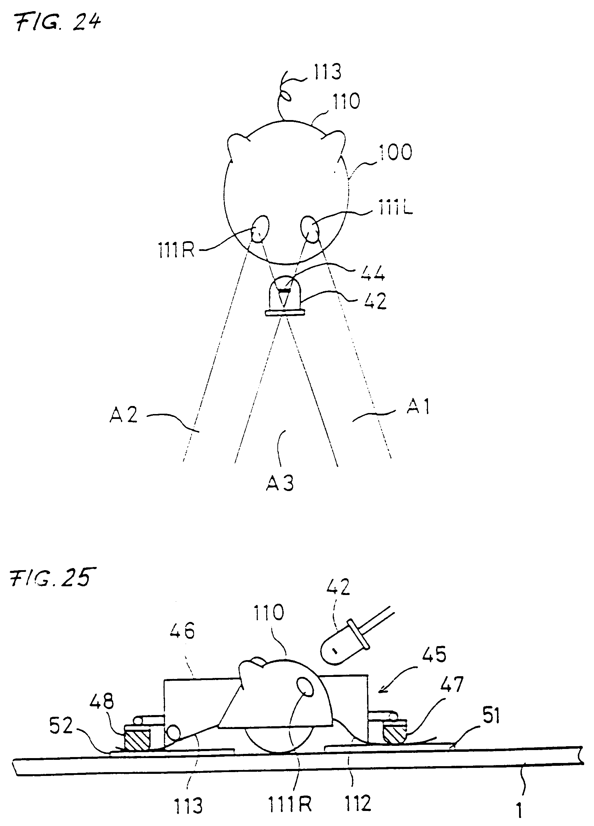

Then, the guiding lamp 42 is turned on (step S4), and the microrobot 100 is guided to the charging position 41 (step S5). The method of guiding the microrobot 100 will now be described with reference to Fig. 24. When the guiding lamp 42 is turned on, the guiding lamp 42 emits light radially. As a result, the microrobot 100 moves while changing the direction thereof such that the light source 44 is positioned between the two sensors 111R and 111L. The microrobot 100 is guided until it passes through the responding ranges (the visual fields A1 and A2) for the two sensors 111R and 111L. Thus, the microrobot 100 is guided and stopped at the charging position 41.

Referring back to Fig. 23, the microrobot 100 is guided to the charging position 41 (step S5), and then the guiding lamp 42 is turned off (step S6). Then, the charging unit is set to the microrobot 100 (step S7) so that the charging operation is started (step S8). If the charging time, for example, three minutes, has passed in step S9, the charging operation is completed, and the charging unit is reset (step S10) so that the microrobot 100 again starts the operation (step S11).

Therefore, electric power can be charged into the microrobot 100 without an operator's operation of removing the microrobot 100 from the operation area 40. It leads to a fact that the operation using the microrobot 100 can be performed continuously for a long time. The operation, interruption of the operation, restarting of the operation and the like of the microrobot 100 are controlled by superposing control signals by causing light to be emitted intermittently or by changing the intensity of light.

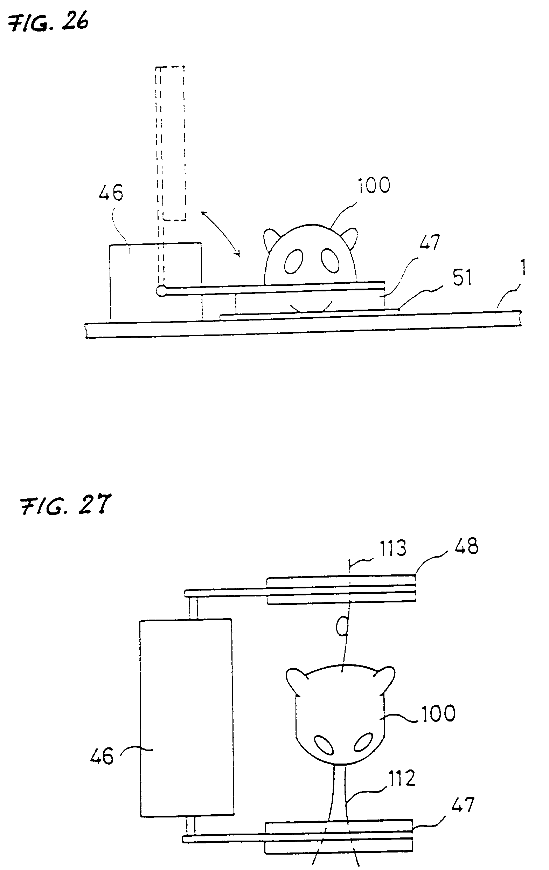

An example of the charging unit for use in the foregoing charging operation will now be described with reference to Figs. 25 to 27. Fig. 25 is a side view of the charging unit in a state where it is performing the charging operation. Fig. 26 is a front view of the same, and Fig. 27 is a plan view of the same.

Referring to Figs. 25 to 27, the charging unit 45 comprises a drive unit 46 which rotates pressing members 4 and 48 from an erected state (indicated by broken lines in Fig. 26) to a laid down state (indicated by solid lines in Fig. 26) to press the lead terminals 112 and 113 against electrodes 51 and 52 of the base plate 1 at the front and rear ends of the microrobot 100 so that their connections are established. In the foregoing state, electric power can be charged into the microrobot 100.

Although the twelfth embodiment employs the method of guiding the microrobot 100 to the charging position by the guiding lamp 42, magnetic fields or ultrasonic waves may be used to guide the microrobot 100. Light, magnetism or ultrasonic waves for guiding the microrobot 100, for detecting the position of the same, or guiding the microrobot 100 to the charging area for use in the operation to be performed by the microrobot 100 may be generated from one generation source or from individual generation sources. The devices (for example, solar cells or coils) for detecting the position and those for performing the charging operation may be used commonly. The method of charging electric power into the microrobot 100 is not limited to that according to this embodiment. It might be considered to employ any one of a variety of methods. For example, a method may be employed in which a solar cell is used to charge electric power in a non-contact manner.

### Thirteenth Embodiment

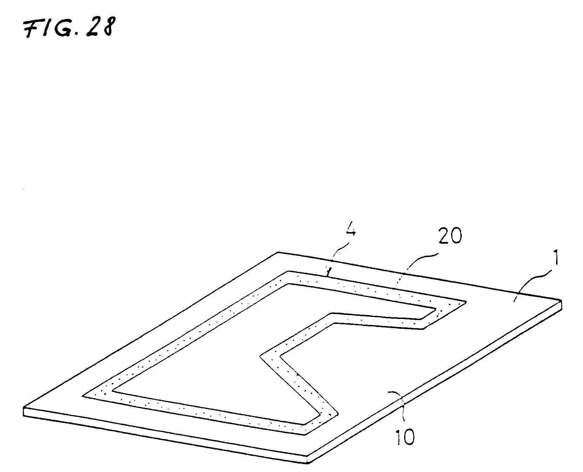

Fig. 28 is a schematic view which illustrates a thirteenth embodiment of the present invention.

A guiding apparatus according to this embodiment comprises a sheet magnet 20 (a magnetic field generating means) for forming the passage 4 on the base surface 10 the sheet magnet 20 being applied to the reverse side of the base plate 1. That is, the passage 4 is constituted by a pattern formed by the sheet magnet 20 and consisting of strong and weak magnetism portions. In the foregoing case, the portions of the microrobot 100 shown in Figs. 1 and 2 and having the eye-like functions (the sensors 111R and 111L) are magnetic sensors. The magnetic sensors detect lines of magnetic force originating from the sheet magnet 20 to cause the microrobot 100 to be moved along the passage 4.

A magnetic film may be applied to the base surface, on which the microrobot is moved, or the reverse surface of the base plate 1 and a magnetic field generating means for magnetizing or demagnetizing a portion of the magnetic film is used to form a desired passage. A multiplicity of magnetic heads (magnetic field generating means) may be disposed in a matrix or zigzag form below the base plate 1. In this case, a desired passage can easily be formed when the magnetic heads are turned on or off.

### Fourteenth Embodiment

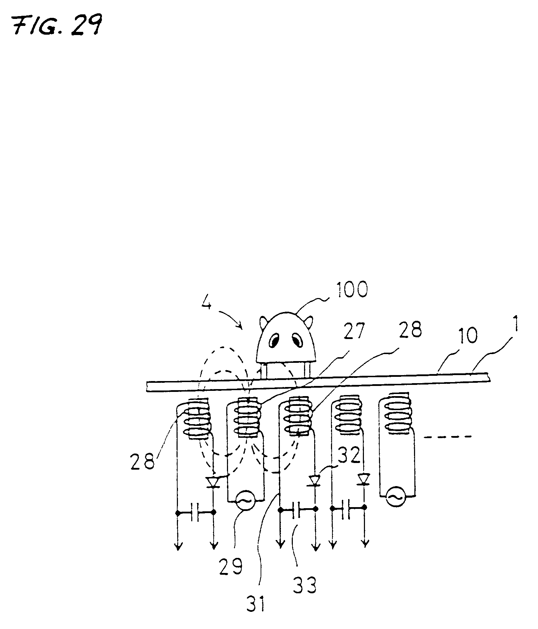

Fig. 29 is a schematic view which illustrates a fourteenth embodiment of the present invention.

A guiding apparatus according to this embodiment has such an arrangement that transmitting magnetic heads 27 and receiving magnetic heads 28 combined with sequentially are disposed below the base plate 1. When voltage is applied from an electric power source 29 to the transmitting magnetic heads 27, a magnetic field passing through the base plate 1 is generated. The magnetic field generates induced electric power in the adjacent receiving magnetic head 28. The induced electric power causes an electric current to flow to a receiving circuit 31, where the electric current is rectified by a diode 32 and smoothed by a capacitor 33.

The operation of a position detection mechanism of the thus arranged apparatus for guiding the microrobot will now be described. When the microrobot 100 approaches a transmitting magnetic head 27, the magnetic field is disordered by the microrobot 100 and the flux density passing through the respective receiving magnetic head 28 is changed. As a result, the voltage of the receiving circuit 31 is changed. In accordance with the change in the voltage, the receiving magnetic head 28 encountering the change in the flux density is detected so that the position of the microrobot 100 is detected.

In this embodiment, transmitting magnetic heads 27 are employed as a magnetic field generating means for forming the passage 4. A magnetic field generated by the transmitting magnetic heads 27 can be used to guide the microrobot 100 including magnetic sensors. That is, when voltage generated by the power source 29 is applied to a transmitting magnetic head 27, a magnetic field passing through the base plate 1 is generated. The intense portion of the magnetic field is used as the passage 4 for the microrobot 100. Alternatively. the passage 4 for the microrobot 100 may by formed by any of the methods described above which project light from a position above the base plate 1 because the transmitting magnetic heads 27 and the receiving magnetic heads 28, which are then used for position detection only, are disposed on the reverse side of the base plate 1.

### Fifteenth Embodiment

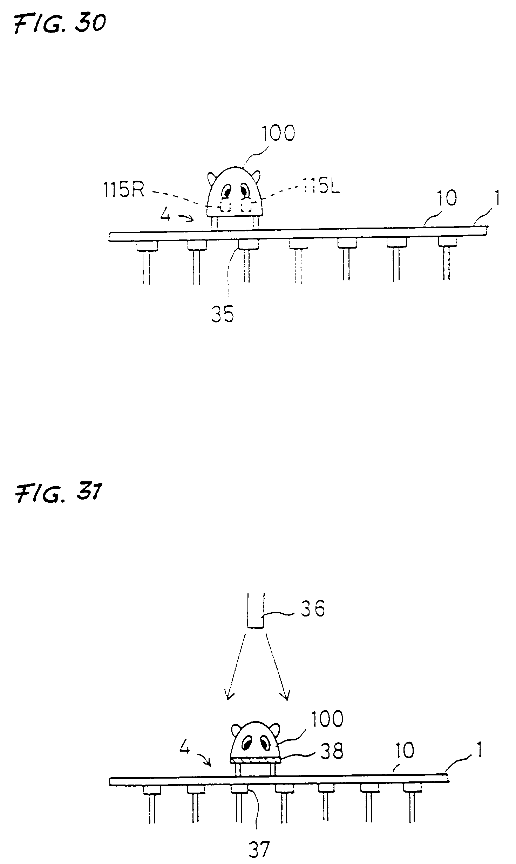

Fig. 30 is a schematic view which illustrates a fifteenth embodiment of the present invention.

A guiding apparatus according to this embodiment comprises a robot position detection means comprises a robot position detection means having such an arrangement that a multiplicity of magnetic sensors 35 are disposed on the reverse side of the base plate 1 and the magnetic fields generated by the step motors 15R and 15L of the microrobot 100 are detected by the magnetic sensors 35 so that the position of the microrobot 100 is detected.

The passage for the microrobot 100 is formed by a method similar to that employed in the fourteenth embodiment. For example, transmitting magnetic heads are disposed among the magnetic sensors 35 and the intense portions of the magnetic fields generated by the transmitting magnetic heads are used as the passage for the microrobot 100. Intense light portions may be used for the passage by applying light from a position above the base plate 1.

### Sixteenth Embodiment

Fig. 31 is a schematic view which illustrates a sixteenth embodiment of the present invention.

An apparatus for guiding a microrobot according to this embodiment guides the microrobot 100 by supplying, from an upper position, light or the like from a generation source 36 for generating light, magnetism or sound. The position detection sensors 37 disposed below the base plate 1 detect the position of the microrobot 100. That is, the intensity of light, magnetism or sound emitted by the generation source 36 to be detected by the position detection sensors 37 is changed if the microrobot 100 passes through a position above the position detection sensor 37. In accordance with the result of the detection, the position of the microrobot 100 is detected. The microrobot 100 may have an insulating plate 38 for insulating light, magnetism or sound generated by the generation source 36. One generation source may serve as generation sources for light or the like for guiding the microrobot and for detecting the position.

### Other Embodiments

If the microrobot moves in response to sound, such as ultrasonic waves, a desired passage pattern can be formed by disposing ultrasonic wave heads or the like. That is, a pattern consisting of intense and weak portions of the ultrasonic waves, which is a physical quantity, is formed on the base surface by using the ultrasonic wave generating apparatus. The microrobot is moved along the foregoing pattern consisting of the intense and weak portions. In order to employ the foregoing guiding method, ultrasonic wave generating means (passage forming means), such as ultrasonic wave heads, for forming a pattern consisting of strong and weak portion of ultrasonic waves, which are physical quantities, are provided for the apparatus for guiding the microrobot, the ultrasonic wave generating means being disposed on the surface of the base plate, on which the microrobot is moved. In this case, a robot position detection means may be provided which supervises the intensity of ultrasonic waves near the base surface and which detects the position of the microrobot because the intensity of the ultrasonic waves is changed in accordance with the position at which the microrobot is moved.

As an alternative to light, magnetism or sound, a detector for detecting an electric current or voltage may be provided and the passage may be formed by a pattern consisting of changed portions of the electric current or the voltage.

As described above, the present invention is characterized in that the passage for the microrobot is formed on the base surface as a pattern consisting of intense and weak portions of the physical quantity, such as light, magnetism or sound. Therefore, the present invention enables the microrobot having the detection means to move along the guide pattern of physical quantity, such as light, magnetism or sound while responding to the intense and weak portions of the physical quantity. Therefore, the operator's guiding operation can be omitted to automatically guide the microrobot. By changing the pattern of the change in the physical quantity, the passage can arbitrarily be formed. Therefore, the operation area can easily be changed, enlarged or contracted. As a result, an effect can be obtained in that the microrobot can be used widely as an amusement robot or a operation robot.

By enlarging the light guide pattern, which forms the passage, on the base surface the reactive range for the microrobot can be enlarged because the microrobot is able to move on a predetermined passage even if the microrobot has been deviated from the central position of the passage.

In a case where the robot position detection means are provided for the passage, the microrobot can be guided to a desired position or area while supervising the position of the microrobot.

In a case where the charging area is provided on the passage, the guidance of the microrobot to the charging area enables the microrobot to be charged with electric power on the base plate. Therefore, the necessity of removing the microrobot from the base plate whenever the charging operation is performed can be omitted. Therefore, it is convenient to cause the microrobot to perform operation continuously.

Although the invention has been described in its preferred form with a certain degree of particularity, it is understood that the present disclosure of the preferred form can be changed in the details of construction and the combination and arrangement of parts may be resorted to without departing from the scope of the invention as defined by the appended claims.

## Claims

1. A method of guiding a microrobot (100) on the surface (10) of a base (1), said microrobot (100) having detection means (111R, 111L) capable of detecting a change in one or more physical quantities, said method comprising the steps of:
forming on said base surface (10) a guide pattern of a physical quantity, said guide pattern defining a passage surface portion (4) within which said physical quantity has a value different fom a value it has in surface portions adjacent to said passage surface portion (4), and
causing said microrobot (100) to move along said passage surface portion (4) in response to said different values of the physical quantity.

2. The method according to claim 1, wherein said physical quantity is at least any one of a quantity of light, magnetism, sound, and electricity.

3. The method according to claim 2, wherein said guide pattern is a light pattern, the brightness and/or color of said passage surface portion (4) being different from that of said adjacent surface portions.

4. The method according to claim 2, wherein said guide pattern is a magnetic pattern, the value of a magnetic field quantity within said passage surface portion (4) being different from that within said adjacent surface portions.

5. The method according to claim 2, wherein said guide pattern is an acoustic pattern, the value of an ultrasonic field quantity within said passage surface portion (4) being different from that within said adjacent surface portions.

6. The method according to any one of the preceding claims, wherein said microrobot (100) is moved while said physical quantity near said base surface (10) is detected and the position of said microrobot (100) is determined based on the fact that the result of said detection changes depending on the position at which said microrobot (100) moves.

7. An apparatus for guiding a microrobot (100) on the surface (10) of a base (1), said microrobot (100) having detection means (111R, 111L) capable of detecting a change in one or more physical quantities, comprising:
said base (1); and
passage forming means (2, 3; 8; 9; 17; 21; 27) for forming, on said base surface (10), a guide pattern of a physical quantity, said guide pattern being defining a passage surface portion (4) within which said physical quantity has a value different fom a value it has in surface portions adjacent to said passage surface portion (4), said passage surface portion (4) establishing a passage for said microrobot (100) on said base surface (10).

8. The apparatus according to claim 7, wherein said physical quantity is at least any one of a quantity of light, magnetism, sound, and electricity.

9. The apparatus according to claim 7 or 8, further comprising robot position detection means (21; 22; 35; 37; 68) for detecting said physical quantity near said base surface (10) and for putting out a detection result depending on the position of said microrobot (100).

10. The apparatus according to claim 8 or 9, wherein said passage forming means (2, 3; 8; 9; 17; 21) comprises a projecting apparatus for projecting a light pattern of bright and dark portions onto said base surface (10).

11. The apparatus according to claim 10, wherein said projecting apparatus comprises light source means and pattern mask means disposed between said light source means and said base (1), said pattern mask means including a light transmissible portion defining said guide pattern.

12. The apparatus according to claim 11, wherein said base comprises a light transmissible base plate (1) defining said base surface (10), and said projecting apparatus is arranged on the reverse side of the base plate (1), opposite to said base surface (10).

13. The apparatus according to claim 8 or 9, wherein said passage forming means comprises light source means (8) for irradiating a limited area of said base surface (10) with light, and a drive mechanism for moving the position of said limited area thereby to form said guide pattern.

14. The apparatus according to claim 8 or 9, wherein said base comprises a light transmissible base plate (1) defining said base surface (10), and said passage forming means comprises, as light source means, a group of light emitting members (9; 21) disposed on the reverse side of said base plate (1), opposite to said base surface (10), and control means (23-26; 60) for causing selected ones of said group of light emitting members to emit light through said base plate (1) thereby to form said guide pattern.

15. The apparatus according to any one of claims 11 to 14, wherein said passage forming includes an optical system (6; 7; 15, 16; 18) for diverging or converging light emitted from said light source means such as to change the size of said light pattern.

16. The apparatus according to claims 9 and 14, wherein said group of light emitting members is a group of LEDs (21), said robot position detection means being adapted to detect the position of said microrobot (100) based on the fact that the electromotive force of LEDs of said group which are not emitting light changes depending upon the position at which said microrobot (100) moves.

17. The apparatus according to claims 9 and 14, wherein said robot position detection means includes light receiving members (22) disposed near said light emitting members and is adapted to detect the position of said microrobot (100) based on the fact that the intensity of light received by said light receiving members changes in response to light reflected by said microrobot (100).

18. The apparatus according to claim 8 or 9, wherein said passage forming means comprises magnetic field generating means (20; 27) arranged to establish said guide pattern as a magnetic pattern.

19. The apparatus according to claim 9 and 18, wherein said robot position detection means is adapted to supervise the magnetic flux density near said base surface (10).

20. The apparatus according to claim 8 or 9, wherein said passage forming means comprises ultrasonic wave generating means arranged to eastablish said guide pattern as a pattern of intense and weak ultrasonic waves.

21. The apparatus according to claim 9 and 20, wherein said robot position detection means is adapted to supervise the intensity of said ultrasonic waves near said base surface (10).

22. The apparatus according to any one of claims 7 to 21, wherein said passage (4) for said microrobot (100) includes a charging area (41) in which charging means (45) for charging electric power into said microrobot (100) is disposed.

23. A measuring apparatus comprising:
an apparatus according to any one of claims 7 to 22, wherein said passage for said microrobot (100) includes measuring positions at which measurements by a sensor mounted on said microrobot (100) are to be performed.

24. An element conveyance apparatus comprising:
an apparatus according to any one of claims 7 to 22, wherein said passage for said microrobot (100) includes a first element delivering/receiving area at which said microrobot (100) receives an element, and a second element delivering/receiving area at which said microrobot (100), at a predetermined position, delivers said element.
